# EUROPEAN PATENT SPECIFICATION

(11) **EP 2 322 487 B1**
(45) Date of publication and mention of the grant of the patent: **06.03.2013**
(21) Application number: 10191090.9
(22) Date of filing: 12.11.2010
(51) Int. Cl.: C02F 3/04, C02F 3/10, C02F 103/32

(54) **Device for the purification of sanitary waste water**
Vorrichtung zur Reinigung von Sanitärabwasser
Dispositif de purification des eaux usées de toilette

(30) Priority: 12.11.2009 EP 09175865
(43) Date of publication of application: 18.05.2011
(73) Proprietor: Quaestor B.V.B.A., 3670 Meeuwen-Gruitrode (BE)
(72) Inventor: Kerkhofs, Erik, 3670 Meeuwen-Gruitrode (BE)
(74) Representative: Luys, Marie-José A.H.

(56) References cited:
- EP-A1- 0 652 090
- WO-A2-99/42422
- WO-A2-2004/026438
- JP-A- 11 156 340
- US-A1- 2002 134 728

## Description

### DESCRIPTION OF THE PRIOR ART.

The present invention relates to a device for the purification of organically polluted wastewater, comprising at least one biofilter for the wastewater purification, which biofilter comprises a bioactive bed with a first layer of coconut mesocarp pieces, the device further comprising a water supply for supplying waste water to be purified to an upper part of the biofilter at a position above the first layer and a water collector for collecting purified water from a lower part of the biofilter at a position below the first layer.

In the treatment of wastewater different processes are involved. These processes can be physical such as filtration, chemical such as disinfection and coagulation, or they can be biological or a combination of two or more of the afore mentioned techniques in order to obtain satisfactory water purification. Examples of biological water purification installations where purification is to be attributed to micro-organism activity include aerated lagoons and systems containing activated sludge. In slow sand filters on the other hand water purification is mainly limited to filtration of larger particles from the wastewater. Sanitary wastewater is normally purified in large water treatment installations via the sewage system, where the activity of micro-organisms is relied upon. If a sanitary wastewater production unit is however not connected to this network, it is necessary that the wastewater is treated on site in a local, smaller installation.

Up to now, sanitary water purification often involved aerobic fermentation of the wastewater in large purification tanks with intensive aeration. Other techniques focused on the filtration of the wastewater using a filtration bed of porous material of a given height, to which the wastewater is supplied. The porous material functions to retain particular matter. In a more advanced embodiment, the porous material also functions as a carrier for the micro-organisms which are responsible for the biological purification of the water. However, only a few materials have been found capable of fulfilling both functions. Although sand and peat and synthetic materials have been widely used for this purpose, coconut mesocarp has been found to be one of the most suitable materials capable of functioning as a mechanical filter and a carrier for the micro-organisms.

EP652090 discloses that chops of the outer coconut husk, which contains the coir and powder derived from the outer husk, is particularly suitable for producing planting material for use in flower pots, which may be watered and fed with nutrients from the bottom because of its high resistance to rotting. If so desired, the coconut husk chops may be mixed with planting soil. The chops are said to have good water and fertilizer holding power and water draining power and to be appropriate micro-organism propagation materials. With coconut outer husk is meant, the residue of the coconut from which the nut and the inner husk and the epicarp are separated.

JP1115340 discloses to concentrate residues of urinary sewage discharged from a cattle shed in coconut material, by wetting fiber material of coconut husks also called epicarp from above with the sewage and by evaporating the water therefrom by aerating the coconut husk material along the bottom.

The use of coconut mesocarp fibers for the aerobic filtration of wastewater is known from EP 1539325. EP1539325 describes a closed device for the filtration of wastewater, which uses as a filter material layers of coconut mesocarp. Coconut mesocarp is a mixture of parenchyma bound up to fibers, which may be mixed with epicarp or endocarp if so desired. The biofilter may further contain additional filter materials such as sand, peat, gravel, perlite, geotile or polymeric material to gain better control of the properties of the filtration bed. Coconut mesocarp is used for its ability to retain particulate matter and to act as a growing medium for micro-organisms which intervene in the water filtration, because the material is available in a variety of grain size distributions and because of its intrinsic porosity.

In EP 1539325, it is advised to use mesocarp as an isotropic mixture of fragments of parenchyma bound-up to fibers, which is the natural structure of coconut mesocarp. The fragments have a diameter greater than 3 mm and are used in a mixture with isolated parenchyma particles with a diameter smaller than 3 mm. When grinding mesocarp to dimensions inferior to 3 mm, rupture of the fragments occurs, dissociating the fibers and parenchyma. The finer parenchyma particles are said to play a fundamental role in the removal of fecal coliformes. Larger particles are said to provide a lower treatment level than finer particles, but they need more frequent surface maintenance. According to another embodiment, fragments of different size are used, whereby the fragments may be placed in different layers of homogenous particle size, from the larger to the finer particle size. The biofilter disclosed in EP1539325 however presents the disadvantage that its purification efficiency is insufficient and that the BOD of the purified water is still high. Although parenchyma as such seems to show good percentage reduction of BOD and TSS, isolation of parenchyma from the coconut mesocarp material is laborious and time consuming, thereby increasing the parenchyma price to a level which is too high to permit use in a system which envisages purification of water to a level to render it suitable for discharge into surface water sources.

In order to be acceptable for discharging into surface water sources, such as creeks, ponds or similar, not only the percentage reduction of TSS and BOD counts, but the absolute values of the TSS (total suspended solids) content, BOD content (biological oxygen demand) and the COD content (chemical oxygen demand) count and should be below a well defined minimum. In particular in order to be acceptable for discharge in the Northern part of Belgium the average TSS should be below 60 mg/l, the average BOD should be below 25 mg/l and the average COD should be below 125 mg/l. A benor certificates, needed to receive discharge permission, is only issued provided that these three parameters are achieved maximum three times over a test period of 38 weeks, and they are not overrun more than once. It has been observed that purification of water using filtering media which contain peat results in a water quality which is insufficient to permit discharging into surface water because of the too high content of TSS, often also the BOD and COD are too high. The use of coconut mesocarp material that has not been compacted usually results in a water quality which is insufficient because of the too high COD.

There is thus a need to a waste water purification system, which permits achieving purification to a degree which is sufficient to permit discharging of the purified water in surface water sources such as creeks, rivers, ponds etc, at an acceptable cost.

It is therefore the object of the present invention to provide a device for the purification of sanitary wastewater which permits to achieve water purification to a degree sufficient to permit discharging of the purified water in surface water sources such as creeks, rivers, ponds etc, at an acceptable cost.

### BRIEF DESCRIPTION OF THE INVENTION.

This is achieved according to the present invention with the technical features of the characterizing portion of the first claim.

Thereto the device of this invention is characterized in that the mesocarp pieces of the first layer have a mean particle size of at least 1 cm, and in that the first layer is compacted and in that the first layer is compacted to have a density of between 75 and 275 kg/m³. With a density of 75-275 kg/m³ is meant that a volume of 1 m³ contains between 75 and 275 kg of mesocarp material.

A coconut roughly consists of three parts, the epicarp, the endocarp and the mesocarp. The epicarp is the thin and smooth layer which surrounds the coconut and the endocarp is the core or stone of the coconut. This endocarp contains the endosperm, which is the white edible portion of the coconut. The mesocarp is the layer that is situated between the epicarp and the endocarp. It mainly consists of fibers between which porous parenchymous tissue also called parenchyma is present. Together, the mesocarp and the epicarp form the husk of the coconut. Coconut mesocarp is commercially available both as loose chopped blocks of the natural material, however the chopped blocks may also be pre-compacted to reduce the volume to facilitate transport. The pre-compacted blocks can easily be loosened again before use by tearing the material apart. Within the scope of this invention coconut mesocarp means parenchyma bound up to fibers.

The coconut mesocarp material used in the first layer of the biofilter of this invention may take the form of bulk mesocarp material, which has been cut or chopped or otherwise sized, into pieces. These pieces show good water permeability. The coconut mesocarp used in the first layer of the biofilter of this invention may however also take the form of pre-compacted blocks which usually will be loosened when building the biofilter by tearing the pre-compacted blocks apart, to facilitate water penetration. The thus loosened blocks are then positioned in the biofilter and subjected to compacting. Compacting of the mesocarp material, whether loosened or not to a density of between 75 and 275 kg/m³ to produce the first layer and before the biofilter is put into use, has the effect that the empty spaces between the fibers within the mesocarp material as such is reduced and that the dimensions of empty spaces between the mesocarp pieces within the first mesocarp layer are reduced, although the number of empty spaces may be reduced as well. If so desired, the mesocarp pieces may be mixed with epicarp or other materials considered suitable by the skilled person. Mixing of mesocarp material with peat is usually not considered suitable for use within the framework of this invention, since peat causes the COD to raise and does not add to the biological activity. Peat may be easily washed out by the flowing water, end up as suspended solid material in the purified water and form a source of unwanted discoloration of the effluent. However, the mesocarp material will usually contain some peat, to achieve that the parenchyma material is bound up to the mesocarp fibers.

Reducing the size of the empty spaces has the effect that the risk to the formation of preferred water flow streams is reduced, that the water flow rate is slowed down by which the residence time of the water within the mesocarp material is increased and that the contact surface area with the coconut mesocarp material may be increased. These effects contribute in guaranteeing a water residence time in the mesocarp material which is sufficiently long to permit achieving the envisaged microbial purification of the wastewater, while at the same time reducing the water flow rate and thus the risk to washing out of the micro-organisms from the mesocarp material. This risk to washing out may be significant in preferred flow streams. Reducing the size of the empty spaces has the effect that the water is forced to spread over the total surface of the first mesocarp layer, and that the water flow rate is slowed down so that penetration of the mesocarp blocks by the water to be purified is stimulated and that water may be absorbed within the mesocarp material. This way water contact with the mesocarp material is maximized and water residence time in the mesocarp material is prolonged. The thus improved contact between the wastewater and the mesocarp material, in particular its surface, permits achieving a thorough first purification already in an upper layer of the biofilter.

The improved spreading in the first layer, improves the water distribution towards the water collector positioned below the first mesocarp layer.

The use in the first layer of mesocarp pieces with a mean minimum particle diameter of at least 1 cm permits to reduce the risk to clogging up of the biofilter and as such assists in prolonging its life time.

Thus, particle size of the mesocarp pieces in the first layer of the bioactive bed and the compacting of this first layer co-operate to optimize water flow through this mesocarp layer and contact with the micro-organism present in the bioactive bed, to ensure optimum microbial purification activity.

The packing of the coconut mesocarp which has been compacted has been found to favor adhesion of micro-organisms and to allow them to form and grow into colonies. The presence of micropores in the mesocarp material ensures that aerobic circumstances are maintained, even when the filter is flooded with water, thus guaranteeing that aerobic water purification can take place in a wide variety of circumstances. The inventors have observed that coconut mesocarp has a high relative surface for ad- and absorption of organic compounds present in wastewater, which function as nutrients for micro-organisms and that coconut mesocarp is an ideal substrate for growing a micro-organism population. The result is that micro-organism development is initiated without the need to graft the mesocarp material with the desired micro-organism population in advance, growth of the micro-organism population is sustained by the wastewater as such, without involving the need to supply nutrients. Thus, suppletion of wastewater suffices to provide natural growth of micro-organisms and biological activity will naturally occur. Besides that, the coconut mesocarp material appears to be stable with respect to erosive action of percolating water and to show good resistance towards biological degradation associated with the action of the different microbial populations developed in the coconut mesocarp material.

When wastewater is supplied to the biofilter of this invention, the solid particles present therein will usually stick to the outer surface of the mesocarp particles. The liquid part will be partially absorbed by the mesocarp material, in particular in the porous fibers, and penetrate into the inner pores thereof. The wastewater is purified by the action of the micro-organism population present on the external surface of the mesocarp particles and in the porous system. Part of the wastewater will be adsorbed in an upper part of the first mesocarp layer, part of it will flow downwardly through the bed through the empty spaces between the mesocarp material and be absorbed and purified in a lower part of the bioactive bed. Water flow throughout the bed will preferably be gravitational, but forced flow can be envisaged as well.

Compacting of the first layer is preferably carried out in such a way that a volume of 1 m³ contains between 100 and 225 kg, preferably between 100 and 250 kg of mesocarp material ,to ensure that the dimensions between the mesocarp pieces are reduced to such an extent that the risk to the formation of preferred flow channels is reduced to a minimum, while guaranteeing a water flow rate which is sufficiently high to permit economic use of the device and sufficiently low to ensure good purification.

Preferably, means are provided in the device of this invention which permit maintaining the pH of the first mesocarp layer between 6 and 9. At this pH, the conditions for the micro-organisms to grow and thus to metabolize the organic purities present in the waste water are ideal. To this end, preferably use is made of an agent which is capable of stabilizing the tannic acid or its precursors or its decomposition compounds, which are released from the mesocarp as a function of time and risk to acidify pH of the bioactive bed. Besides that it may happen that the pH of the wastewater is quite low. When the pH of the biofilter drops to too low values, there is a risk that growth of the micro-organisms is inhibited as a consequence of which metabolisation of the organic impurities present in the wastewater deteriorates, thus deteriorating the purification efficiency. Preferred pH controlling agents are Ca or Mg salts with low water solubility that are able to react with acids, in particular a granulate which contains CaCO₃ or MgCO₃ or a mixture of these materials, since granular particles dissolve more slowly. A preferred pH controlling agent is limestone which is largely composed of CaCO₃. Often limestone will contain MgCO₃ as an impurity and MgCO₃ is considered a suitable pH controlling agent as well. CaCO₃ respectively MgCO₃ react with tannic acid, releasing carbon dioxide. Preferably the agent is mixed in the form of a powder or granulate with the mesocarp pieces when building the first mesocarp layer. However, if so desired, additional pH controlling agent can be supplied to increase the life time of the biofilter.

Further improvement of the water purification efficiency is achieved by optimizing spreading of the wastewater over the majority of the surface of the bioactive bed, already in the wastewater supply. This way the risk is minimized that some areas of the bed will be flooded with wastewater and in the end get clogged up or worn out, while other areas won't receive wastewater at all and deteriorate their activity because of long dryness and deteriorating microbial activity. To achieve this, the device preferably comprises a water supply device which is arranged to supply water above the top face of the first mesocarp layer and to provide a substantially homogeneous distribution of water over the surface of the first mesocarp layer.

The wastewater to be purified is preferably supplied batchwise. Wastewater is usually produced in a batchwise manner. Batchwise supply permits ensuring that waste water is supplied only after a volume has been collected which is sufficient to wet virtually the full surface of the first mesocarp layer, that regular supply of water to the bioactive bed is achieved and the bioactive bed is kept going, while minimizing the risk to flooding and overloading the bioactive bed and situations of dryness. The batchwise supply is preferably controlled in such a way that continuous loading of the biobed with wastewater is achieved. This way the activity of the bed may be maintained on a continuous basis, the risk to reducing the micro-organism population is reduced and bioactivity of the bed is optimized.

The biofilter of this invention will usually contain a second layer with good drainage properties, in particular a layer which contains a sufficient number of voids with sufficiently large dimensions to permit receiving and temporarily stocking purified water seeping through from the first layer. Usually the second lower layer will mainly function as a support or carrier for the first layer and as a drainage layer to permit aerating the first layer from below and to permit draining water which has been purified in the first layer towards a water run off system.

In a further preferred embodiment of the invention, the device is at least partly open to air. This open structure can be installed in a garden or a field. Since the entire system is open to the air, oxygen needed to maintain bioactivity can enter the biofilter through the top side.

The present invention further relates to a method for producing a device for the purification of sanitary wastewater as described above and in the detailed description below. The method for producing a device for the purification of sanitary wastewater comprising at least one biofilter for the wastewater purification, comprises the step of positioning at least a first upper layer of coconut mesocarp pieces on top of the water collecting device, wherein the first layer comprises mesocarp pieces with a mean particle size of at least 1 cm, and wherein the first layer is compacted.

The invention further relates to a method for purifying water, wherein at least one batch of wastewater is supplied on top of the first mesocarp layer described above and in the detailed description below and in that purified water is collected from a lower part of the biofilter at a position below the first layer.

The invention will be described in more detail in the accompanying figures and figure description.
Figure 1 shows a cross section of a water purification device according to the present invention.
Figure 2 shows preferred embodiments of a device for supplying water to the biofilter.
Figure 3 shows a cross section of a coconut.

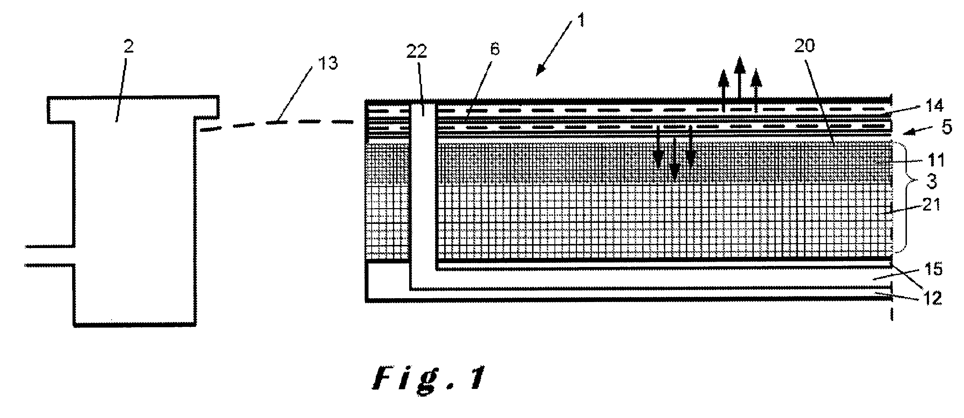

The device shown in figure 1 is a preferred embodiment of this invention and is suitable for the purification of wastewater of widely varying origins. The device of this invention is particularly suitable for sanitary wastewater purification, because its dimensions can be varied within wide ranges and installation is easy. Sanitary wastewater includes wastewater from a wide variety of origins, e.g. from kitchen, bathroom, washing machine etc. Depending on the nature and composition of industrial wastewaters, the device of the present invention might be suitable for purifying industrial or agricultural wastewaters as well, provided the micro-organism population is not adversely affected upon contact with the industrial wastewater. Wastewater may for example originate from food processing industry, for example dairy or milk products, fat, chocolate etc. It has been calculated that in household situations, per person per day (which corresponds to 1 i.e.) about 150 liter of sanitary wastewater are produced, but this may vary regionally. About half of this amount originates from the use of bathroom and sanitary devices; the remainder originates from laundry washing, dishwashing and others. As such sanitary water will usually include a quite wide variety of components which may be both liquid and solid. Frequently occurring components include detergents involved in human, laundry and dishwashing, food ingredients, small amounts of solvents, fats, food left overs, fecals, etc.

The water purification device shown in figure 1 comprises two main parts, in particular a wastewater storage tank 2 which is connected to the biofilter volume 3, which contains a biofilter 1.

In a preferred embodiment, wastewater is first supplied to and collected in a wastewater storage tank 2 and transferred from there to the biofilter 1. The wastewater storage tank 2 acts as a buffer to avoid flooding of the biofilter when large volumes of wastewater are produced. The wastewater storage tank acts as a collector, to permit collecting a volume of waste water which is sufficient to ensure loading of the wastewater supply 5 in an amount which is sufficient to permit homogeneous spreading of wastewater of the entire surface of the bioactive bed. The wastewater storage tank 2 is preferably equipped with a liquid transport mechanism 21, for transporting wastewater towards the biofilter volume 3. The connection 21 may be such that wastewater is transferred either from a top, a central or a bottom region in height direction of the wastewater storage tank to a top region of the biofilter 1.

If so desired the device of this invention may include a presedimentation tank to permit separation of larger and heavy solid particles from the remainder of the liquid part of the wastewater, to limit the risk that floating and fat components which accumulate along the top of the presedimentation tank contact the bioactive bed, and to minimise the risk to clogging up of the biofilter by particles which have settled in a bottom region of the pre-sedimentation tank. The pre-sedimentation tank is usually a closed device in which an anaerobic atmosphere is maintained to achieve that solid components of the wastewater may be digested by anaerobic micro-organisms and that the majority of the solid components of the sanitary wastewater may be liquefied. If so desired, the use of a pre-sedimentation tank can be dispensed with and the water may be supplied to the biofilter volume directly, or the water storage tank may function as a presedimentation tank. However, as mentioned above, it is advised to install a system for anaerobic presedimentation for the removal of solid particles. The top region of the presedimentation tank will usually contain fat components, the bottom region will usually mainly contain sediment and therefore water will usually be supplied from a central region of the pre-sedimentation tank.

If so desired in case the sanitary water contains large amounts of fat, the pre-sedimentation tank may be preceded by a fat capturing device, to remove fat components from the sanitary wastewater before it enters the pre-sedimentation tank. Although the presence of a fat capturing device may improve the performance of the purification, usually the majority of the fat components may be decomposed in the anaerobic presedimentation, and as such the fat capturing device is not mandatory.

Wastewater supply from the wastewater storage tank to the biofilter volume 3 using the water supply system 5, may be continuous. The person skilled in the art will be capable of adapting the wastewater flow rate in such a way that a continuous loading of the bioactive bed is achieved, at minimum risk to overloading the bed or creating situations of dryness. Overloading of the bioactive bed 1 and immersion in water is to be avoided as this may involve partial water purification only, washing out of the micro-organisms, enhanced mesocarp material decomposition and rotting.

Wastewater supply may also be batchwise, as this appears to be the way in which wastewater is usually produced. Thereby, the water supply to the bioactive bed is preferably organised in such a way that a continuous loading of the bioactive bed is achieved, with the purpose of keeping the purification activity going and achieving a continuous operation of the bioactive bed. A continuous loading may be achieved by supplying subsequent batches of wastewater at regular time intervals. The time intervals may however also be variable, depending on the amount of wastewater produced as a function of time. If the wastewater production rate is constant as a function of time, water may be supplied at regular, constant time intervals. In case the volume of wastewater produced varies as a function of time, the time intervals after which water is supplied may be varied, to ensure that uniform loading of the entire surface of the bed is guaranteed. Water supply may be controlled by the presence of a water level detector in the water storage tank 2, which is provided to activate the water supply device 7 when a pre-determined water level is achieved in the water storage tank. However other means for controlling the water supply may be used as well. The batchwise supply is further preferably organised in such a way that the bed is not continuously flooded by and fully immersed in water, to slow down decomposition of the mesocarp material and reduce the risk to rotting, and to reduce the risk to overloading of the bio-active bed with wastewater and the ensuing washing out of the micro-organisms.

If the circumstances so desire, the wastewater supply may be organized in such a way that the bioactive bed finds itself in a dry state for certain periods of time. In these dry states, biodegradation of the mesocarp material is slowed down, the mesocarp material will often still contain some absorbed water in the inner pores of the material which ensure survival of the micro-organisms to a sufficient extent. Even after a dry period, the bioactive bed will recover, the micro-organism population will start growing again upon the first contact of the coconut mesocarp pieces with wastewater: Coconut mesocarp presents the advantage that it is capable of accepting a flexible water load. Coconut mesocarp also appears to sustain periods of full immersion in water, to show rotting to a minimum extent only and to recover after having been fully immersed in water. Controlling wastewater supply thus ensures a long economic lifetime of the biobed at minimum risk to overloading the biobed.

Batchwise supply of wastewater is preferably organized in such a way that subsequent batches of wastewater are supplied at intermittent time intervals. Thereby the volume of wastewater supplied towards the water supply 5 is such that it is sufficient to supply about the entire surface 20 of the first mesocarp layer 11, with virtually the same amount of water, although variations in wastewater volume supplied per surface area may be accepted by the bioactive bed without adversely affecting its activity. The intermittent time intervals may be of the same or a different length of time. The amount supplied and the time intervals will be adapted to the time needed by the wastewater to flow through the bioactive bed.

The wastewater supply is preferably organized in such a way that a continuous or a virtually continuous loading of the bioactive bed is guaranteed as this keeps the bioactivity going, stimulates bio-activity of the bed and ensures optimum yield of purified water. This way it may be ensured that the biofilter bed always contains water to be purified so that the micro-organism population is maintained. Water supply may be organized in such a way that an optimum compromise is offered between a flow rate of wastewater through the bed which is sufficiently fast to provide the desired purification yield, but slow enough to ensure a sufficient degree of biological purification, at minimum risk to washing out of the micro-organisms present on the mesocarp material and to degradation of the coconut mesocarp.

Batchwise and continuous supply of wastewater to the biofliter bed can be achieved according to any technique known to the skilled person. The person skilled in the art will be capable of selecting the most appropriate water supply and of adapting the volume of each wastewater batch to the volume that may be contained in the water supply device 5, the capacity of the biofilter and the envisaged purification degree. Usually the volume of the waste water batch will be chosen such that the water supply 5 can be fully filled as this ensures homogeneous water supply to the bioactive bed.

The biofilter volume 3 is suitable for installation in a wide variety of environments, it may be a system which is open to the air or a closed system. The open system presents the advantage that it may be installed as such in a garden, next to the location where the wastewater to be treated by the biofilter, is produced. For example, the biofilter may be installed in a dedicated cavity in a garden. The walls and bottom of the hole will usually be covered with a film or foil 4 made of a plastic material, which is not readily biodegradable, to permit adequate mounting of all parts of the biofilter. In stead thereof, the biofilter may also be installed in a rigid basin. Other advantages of the open structure are that air will access the biofilter through the upper side and that as a result external oxygen supply is not necessary, bearing in mind the wastewater is supplied batchwise and that oxygen necessary for aerobic digestion is supplied with the wastewater; that the entire process, including the decomposition of sludge-like material present in the wastewater occurs in one single tank. The persisted oxidation occurring in the filter causes an auto-consumption of biomass that prevents accumulation of organic matter. This way the system is self-regulating. In case use is made of a closed system, usually an air supply will be provided to guarantee air supply to the interior of the volume which contains the bioactive bed.

The preferred embodiment of the biofilter shown in figure 1 comprises a bioactive bed 1 which in turn comprises at least a bioactive upper layer 11 comprising pieces of coconut mesocarp material A water supply is positioned on top of the first mesocarp layer, either directly on top or at a distance there from. Below the upper layer 11a water collector 15 is mounted, to evacuate water that has ran through the bioactive bed to a discharge unit (not shown). The water collector 15 may contain a part 22 which extends to a position above the bioactive bed, to permit aeration from a position below the bioactive bed, through holes provided in the water collector 15. If so desired, means may be provided to supply an oxygen containing gas at a pressure above atmospheric pressure.

Preferably a second lower layer 12 is provided below the first upper mesocarp layer 11. The water evacuation means 15 will usually be positioned in the second layer 12, but they may be positioned below that layer as well.

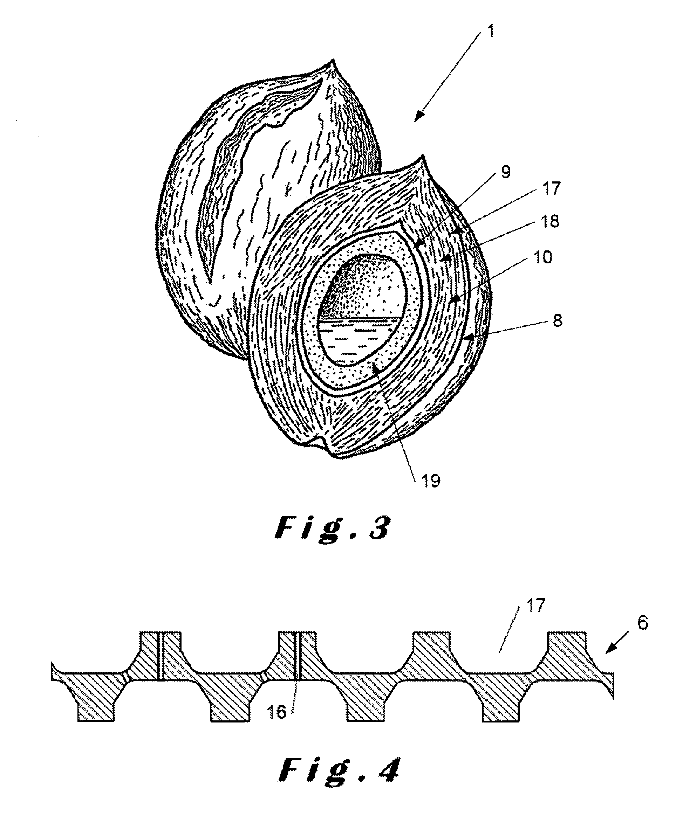

The second layer 12 mainly fulfills the function of a support for the first layer 11 and of drainage layer, for conducting water which has been purified in the first layer 11 and has seeped through into the second layer 12, towards the water collector 15 along which purified water is discharged. The material used to build the second layer 12 may be any drainage material considered suitable by the skilled person. The second layer 12 may comprise a layer of particulate material which may be any particulate material considered suitable by the skilled person, in as far as the material does not readily decompose upon contact with water. A suitable material for use in the second layer is pieces of mesocarp material, in particular mesocarp pieces with a mean particle size between 4 and 7 cm. Other suitable material pieces for use as a second layer include pieces of porous material for example Argex®, pebbles, pieces made of a plastic material. The second layer 12 may however also comprise a sheet of a water impervious material, for example a polymer material, which sheet comprises a plurality of recessed, water capturing volumes for receiving and storing water as shown in figure 4 and described below. The second layer 12 may comprise any other three-dimensional material with interconnected voids which permit draining of water from an upper part of the material to a lower part of the material, for example a honeycomb material. If so desired a combination of the above described materials within one single layer may be used as well. If so desired the second layer may comprise a plurality of superimposed layers, comprising the above described materials, according to which an upper part of the second layer is made of a layer of pieces of mesocarp material, a central part is made of a layer of another particulate material and the lowest layer is made of a porous three-dimensional structure. According to another embodiment, the second layer may comprise a frame, which surrounds a hollow volume that gives access to the water collector 15, whereas a top face of the frame functions as a support face for the first upper layer 11.

The mesocarp pieces in the first layer 11 have a smaller mean particle size than the material or mesocarp pieces in the second layer 12. Preferably, the mesocarp pieces of the first layer 11 have a mean particle size which is at least 1 cm, preferably at least 2 cm to minimise the risk to washing out of the particles and clogging of the equipment. The mesocarp pieces of the first layer preferably have a mean particle size which is less than 6 cm, preferably less than 5 cm, more preferably less than 4 cm, often between 2 and 4 cm to minimise the risk to the occurrence of preferential water flow paths which would limit the contact time between the wastewater and the mesocarp material, and to ensure that water is distributed as homogeneously as possible over the first mesocarp layer 11 so that homogeneous water supply to the second mesocarp layer 12 is ensured. The use of mesocarp pieces with a mean particle size of between 2 and 4 cm is particularly preferred. In order to provide an optimal efficiency, the first layer is preferably the thicker one, and the thickness of this first layer is preferably at least about 40 cm, preferably at least about 50 cm. The thickness of the first layer will usually be less than 100 cm. However other thicknesses may be used if the surface area of the biobed and expected loading so require. In this fist mesocarp layer 11 the majority of the water purification takes place.

If so desired, the mean particle size of the mesocarp pieces in the first layer 11 may vary in function of the depth of the first layer. It may for example be considered to use as a first layer, a plurality of sub-layers positioned on top of each other, each layer being built of mesocarp particles with a different mean particle size. Thereby the mean particle size of the mesocarp pieces will preferably increase when moving from the upper face of the first layer 11 towards the second layer 12 to facilitate draining. The mean particle size may for example increase gradually. The material of the first layer may exclusively consist of mesocarp material, but it may also contain other mixed in particulate material such as for example sand, peat etc. In the situation shown in figure 1, the first layer 11 consists of an upper layer with mesocarp pieces of a smaller particle size, and a lower layer with mesocarp pieces of a larger particle size.

By having the first layer of mesocarp pieces 11 with the smaller mean particle size in an upper part of the biofilter the wastewater entering the biobed is forced to flow through a dramatically increased number of flow paths with a smaller diameter in an upper part of the biofilter. The smaller dimensions of flow paths occurring between smaller particles provide a larger contact surface between the wastewater and the surface area of the mesocarp, which functions as a culture medium for a wide variety of aerobic micro-organisms active in water purification. Thus a large contact surface area between the wastewater to be treated and the micro-organisms is guaranteed. Thus, water purification will be the rate limiting step of the biofilter. By having a layer of a material 12 with a larger mean particle size or water run off voids with a larger diameter in a lower part of the biofilter, drainage and oxygen supply to the biofilter are optimized and the risk is minimized that drainage will be the rate limiting step.

In case use is made of particulate material for the second layer 12, it is advised to choose the particle size in the second layer such that interconnected voids between the particles of the second layer facilitate water run off from the first layer and promote aeration of the first layer to provide good drainage.

In the preferred embodiment where the second lower layer preferably comprises material pieces, in particular mesocarp pieces, the mean particle size of these pieces will usually be less than 15 cm, preferably less than 10 cm, preferably less than 8 cm, more preferably less than 7 cm, but more than 2 cm, preferably more than 3 cm, more preferably more than 4 cm. The mean particle size of the mesocarp particles in the second layer is preferably between 4 and 7 cm. This way the second layer 12 will permit fast evacuation of purified water, it will not act as the purification rate determining layer, and in that way the risk to over flowing of the filter is minimised. The second lower layer 12 will often function as an aeration layer to supply the first layer 11 with sufficient oxygen. Through natural convection, air present in this layer will spread through the whole of the biofilter, providing the entire system with oxygen. Because the pieces are larger, optimum interaction between the wastewater and air present in this layer is provided, so that aerobic water purification can also occur in the lower layer. The second layer will usually have a smaller thickness than the first layer but a thickness which is such that the second layer extends to a position above any holes in the water collector 15, to minimise the risk to clogging thereof. The second lower layer will usually have a thickness of between 5 and 30 cm, often 10-20 cm. Often the thickness of the second layer will be about 20 % of the total thickness of the biobed. In case it is made of particulate material, such as for example coconut mesocarp, the second layer will usually be compacted as well, to minimise the risk to collapsing of the bed as a function of time.

The sum of the thicknesses of the first and second mesocarp layer 11, 12 will preferably be at least 75 cm, more preferably at least 85 cm, but larger or smaller thicknesses may be used as well taking into account the surface area of the bioactive bed and the expected load. The skilled person will be capable of adjusting the thickness of the first and second layer taking into account the surface area of the biobed and the expected wastewater load.

To build the second layer 12, usually the pieces of mesocarp material are torn apart to loosen the material, positioned in the cavity and compacted, at least 10%, preferably 20-30%. Compacting is preferably carried out until a corresponding volume of 1m³ would contain between 75 and 275 kg of mesocarp, preferably between 100-250 kg, more preferably between 100 and 225 kg, most preferably between 80 and 200 kg. In case the second layer contains another material, compacting may be less depending on the nature of the material used. Similarly, to build the first layer 11, the pieces of mesocarp material are torn apart to loosen the material, positioned in the cavity on top of the second layer 12 and compacted, at least 10%, preferably 20-30%. Compacting may be done using any technique known to the skilled person. This compacting has the effect that the mesocarp material as such is compressed, that dimensions of the voids existing between the loosely packed mesocarp pieces are reduced, and that the flow paths are oriented randomly with respect to each other. This way water flow rate is slowed down, the risk to the formation of preferred water flow streams is reduced, while leaving a sufficiently large accessible contact surface area between the water and the mesocarp particles to guarantee optimal purification efficiency, at minimum risk to clogging up of the filter.

If so desired, to ensure optimal water purification quality from the beginning, the pieces of coconut mesocarp are in advance grafted with the appropriate microorganisms.

If so desired, to further improve the performance of the biofilter, additional layers of mesocarp material or other particulate material may be provided below the second layer 12.

For example, a further layer of a biologically active material may be provided, especially in case further improvement of the efficiency and the water quality is envisaged. In particular it may be advantageous to provide a layer of activated carbon, charcoal or any other carrier for denitrification bacteria below the lowest mesocarp layer. Activated carbon and charcoal are capable of adsorbing a wide range of organic compounds and other compounds dissolved or suspended in liquids and function as a filter to remove bacteria and insoluble salts in water. Above this, activated carbon and charcoal are especially useful in water treatment installations with regards to denitrification of wastewater. The inventors have observed that a layer of activated carbon or charcoal below the different mesocarp layers of the biofilter provides the entire system with an improved purification and a higher efficiency. According to another embodiment however, activated carbon or charcoal may be mixed in the second layer 12.

On top of the first mesocarp layer 11 a top layer 14 of a water absorption medium may be provided. The water absorption layer will usually have a thickness of about 15-20 cm, but it may be thinner or thicker. If so desired, coconut mesocarp can be used to construct this layer. Preferably, a decorative top layer comprising water absorption material is provided on top of water supply means 5, the first mesocarp layer 11 or the water absorption layer if the device is constructed in an open embodiment of the invention. The nature of the water absorption material is not critical to the invention, and suitable examples include wood chips, porous inorganic materials, plant growing material or any other kind of water absorption material known by the person skilled in the art. This top layer functions as an absorption layer for odour produced by the wastewater. The top layer also functions as a water flow regulator, in particular as an at least temporary absorption medium for water originating from rainy weather conditions, by absorbing the water, retaining it for some time and forwarding it to the lower mesocarp layers whereby part of the adsorbed layer will usually evaporate as well. This layer also functions as a water spreading layer, whereby absorbed water is spread over the mesocarp as uniformly as possible, to minimise the risk to flooding of the biofilter in case of heave rain for example. Usually the adsorbed water will be released again when the osmotic pressure in the biofilter sinks below the osmotic pressure of the water absorption medium 14. This way the risk to the occurrence of shock loads in the lower mesocarp layers and the ensuring risk of washing out of the micro-organisms from the mesocarp is minimized.

Water which is supplied to the biofilter, may have a pH which varies from 4 or 5 to 10, 11 or more. At a too low or too high pH, the survival of the micro-organism population is put at risk and therefore, the biofilter of this invention preferably comprises means to maintain a pH of the first and second mesocarp layer 11, 12 between 6 and 9. These pH values not only appear to promote growth of the micro-organism population, but they fit to the pH requirements of potable water. Furthermore, the inventors have observed that after prolonged contact times with water, tannic acid or precursors or decomposition products thereof are released by the mesocarp material, which tends to lower the pH. Any means considered suitable by the skilled person may be used for the purpose of controlling the pH. Particularly preferred are compounds which are capable of stabilising tannic acid, its precursors or decomposition products. According to a possible embodiment, Ca or Mg salts with low water solubility are mixed with the mesocarp material. A preferred pH controlling agent is limestone which is largely composed of CaCO₃ but may also be a mixture of CaCO₃ and MgCO₃. CaCO₃ and MgCO₃ have low water solubility and thus remain available for a long period of time. Preferably the PH controlling agent is mixed in the form of a powder or granulate with the mesocarp pieces for the first layer 11 when building the biofilter. If deemed appropriate, the second layer 12 may contain this pH controlling agent as well, but this is not mandatory.

As can be seen from figure 3, a coconut roughly consists of three parts, the epicarp 8, the endocarp 9 and the mesocarp 10. The epicarp 8 is the thin and smooth layer which surrounds the coconut and the endocarp 9 is the core or stone of the coconut. This endocarp 9 contains the endosperm 19, which is the white edible portion of the coconut. The mesocarp 10 is the layer that is situated between the epicarp 8 and the endocarp 9. It comprises fiber 17 and parenchymous tissue 18 also called parenchyma. Together, the mesocarp 10 and the epicarp 8 form the husk of the coconut. Coconut mesocarp 8 is used in the biofilter of this invention for multiple reasons, such as its ability to retain particulate matter and to act as a growing medium for micro-organisms, the fact that the material is available in a variety of grain size distributions and because of its intrinsic porosity. Advantageously, biofilters based on coconut mesocarp can comprise an additional biofilter material such as sand, peat, gravel, perlite, geotextile or a mat of polymeric material as they improve the water spreading over the bed. Although upon contact with wastewater, the appropriate micro-organisms will start growing as such on the mesocarp material, the mesocarp pieces may be grafted with micro-organisms in advance if so desired, to achieve that the purification device shows optimum performance from the beginning.

The device of the present invention further comprises means 5 for supplying wastewater to a top part of the biofilter 1, so that the wastewater can flow through the biofilter in a gravitational manner. The gravitational flow ensures that the contact time between the wastewater and the biofilter 1 may be maintained for a period of time, which is sufficiently long to guarantee optimal water purification.

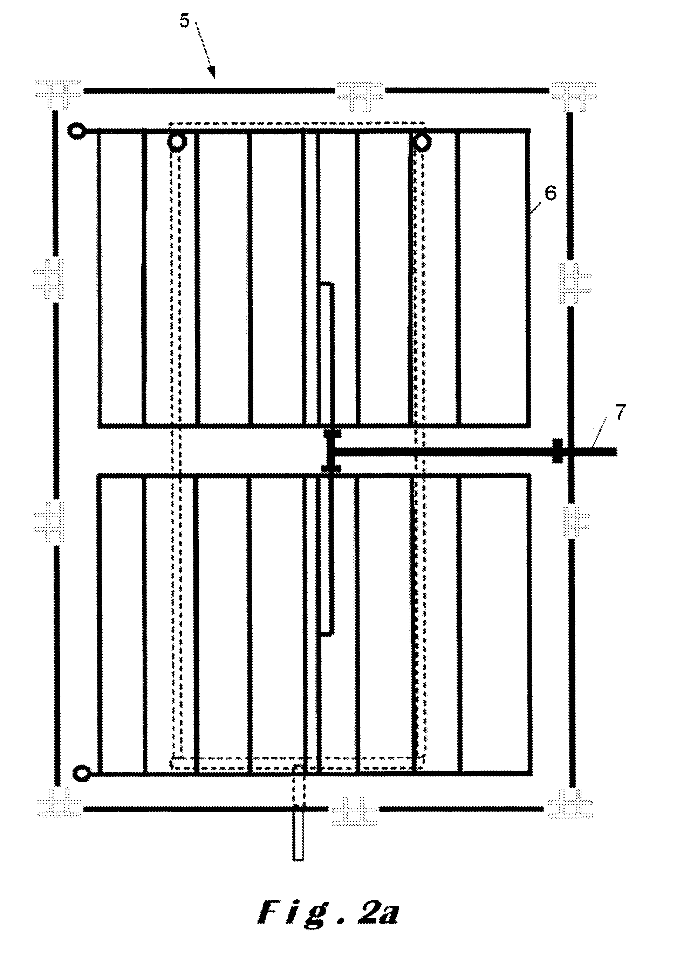

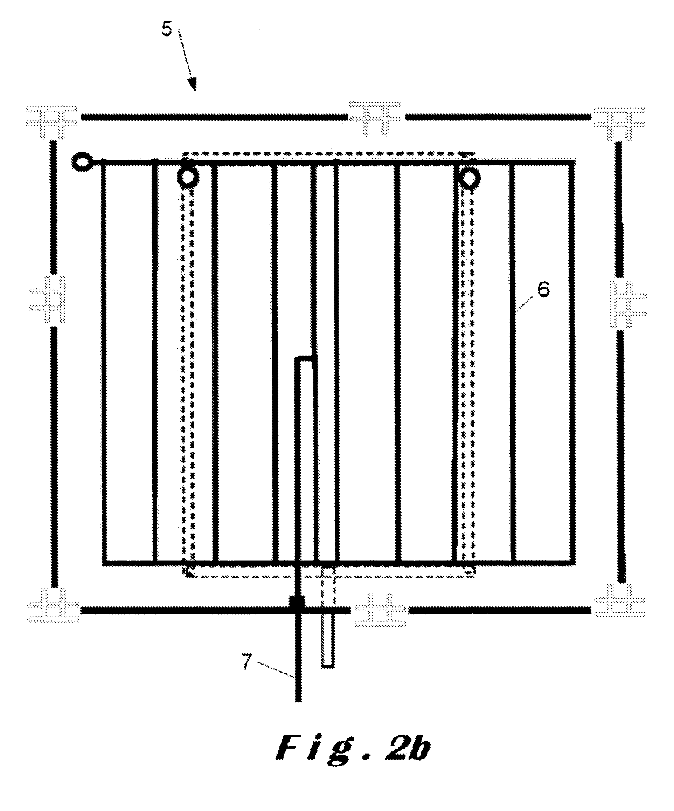

The water supply device 5 is preferably constructed in such a way that water is supplied to about the entire surface of the biofilter, so that optimum spreading of the wastewater over the entire surface of the biofilter is achieved. Uniform water distribution over the biofilter surface minimizes the risk that certain areas only will be fed with water, as a result of which these areas will be subject to erosion, to faster wearing out of the biological activity and in the end will get clogged up, while other areas won't receive wastewater at all. To provide a water supply which is distributed as uniformly as possible over the entire surface of the biofilter, use can be made of any system known to the skilled person, capable of doing so. According to a practical embodiment, use is made of a so called water percolation frame 5, for example a frame shown in figure 2a and 2b. The percolation frame 5 of the present invention comprises at least one tube 6 which is perforated on a side facing the biofilter, to provide holes along which water may flow from the tube 6 towards the top face of the biofilter 1. The at least one perforated tube may be made of any material considered by the skilled person, for example metal, in particular stainless steel, copper or zinc, or a plastic material for example polyvinylchloride, polyethylene, polypropylene or any other suitable material.

In case a single tube is used, the tube will be configured in such a way that it is capable of supplying water to a large part of the biofilter surface. The tube may for example be circularly wound. However, it is also possible to supply wastewater along a central supply 7 as shown in figure 2b, from which water is supplied to a plurality of tubes 6 which extend in longitudinal direction of the bed. In the embodiment shown, the tubes 6 run in longitudinal direction of the bed and parallel to each other, but any other configuration may be considered as well. In figure 2a, the water supply device 5 comprises a central water supply 7 which is provided to supply water to opposite sides of the water supply device 5, to facilitate spreading of the water.

Preferably, the perforations present in the tube have a diameter which is at least 5 mm, more preferably at least 8 mm, most preferably at least 1 cm to provide a sufficiently large flow rate and to minimize the risk to clogging. To provide a water flow which is most suitable for the biobed of this invention, the percolation frame is preferably filled with water, after which the water may leave the percolation frame dropwise by dropping from the perforations. Water which is expelled from the perforations, will usually spread along a conical figure, and this way a larger surface is supplied with water than the surface area provided by the perforations as such. Further spreading and optimization of water supply may be achieved by supplying water at a pressure above atmospheric pressure. Further spreading may also be achieved by supplying water to a water absorption layer positioned on top of the first mesocarp layer as described above.

According to another practical embodiment, the water supply device 5 of this invention comprises a layer of a water-capturing material, which may consist of a sheet of a water impervious material, for example a polymer material, which sheet comprises a plurality of recessed, water capturing volumes for receiving and storing water. At least part of the hollow volumes in the water-capturing layer has a top face, which is substantially open and capable of capturing water. An example of a suitable material for the water-capturing layer is Floradrain, a polyethylene sheet supplied by Zinco, the Netherlands. Other suitable materials for the sheet include polyethylene, polyproplene, polycarbonate, polyolefin, polyamid, thermoplastic materials, hardened resins or any other material known to the man skilled in the art. Usually the water capturing volumes will be perforated at the bottom to permit water to seep through, towards the bed.

Optimally, a biobed for 5 PE is provided with wastewater of batches of about 30-50 liters, but larger of smaller batches of wastewater may be supplied as well. These volumes of wastewater can be absorbed by the filter efficiently, fresh air and oxygen may be supplied with every batch and the risk to washing out of the micro-organisms is reduced to a minimum. In case the wastewater stream is continuous or in case wastewater is supplied in larger batches than can be handled by the biofilter bed, a mechanical system may be provided which controls the volume of wastewater supplied in such a way that adequate volumes are supplied. This way it may be achieved that the biobed is fed with a batch of wastewater in one go to deliver a sudden quantity of water, following which the biobed is left for some time sufficient to permit absorption of the water by the material of the biobed and to guarantee optimum distribution over the biobed. Thereafter, a subsequent batch of wastewater may be supplied. Preferably water supply is done in such a way that it is evenly distributed over the day, irrespective of the time frame in which the wastewater is produced.

### Example.

A biofilter bed was constructed by making a hole in the ground of 1.90 m length, 1.90 m width and 1 m height, for 5 people, and by covering the bottom and side faces of the hole with a plastic film made of firestone pond liner rubber geomembrane (EPDM) of 1 mm thickness with reinforced corners. This volume should be sufficient to purify waste water produced by 5 people per day.

The biofilter was made by providing a second lower layer of coconut mesocarp material, the pieces of which had a mean particle size of between 5 and 10 cm. This layer provides 20 vol. % of the mesocarp material of the biofilter. On top of the surface of the material of the second layer, a pressure device was installed to subject the second layer to a pressure and compact the mesocarp material. On top of the second lower layer, a first upper layer of coconut mesocarp pieces was positioned, with a mean particle size of between 2-4 cm. This layer provides 70 vol. % of the coconut mesocarp material for the biofilter. On top of the surface of the material of the first layer, a pressure device was installed to subject the first layer to a pressure and compact the mesocarp material. The coconut mesocarp material of the first and second layer together had a density of 180 kg/m³.

The percolation frame was mounted on top of the first upper layer. The percolation frame and the first coconut mesocarp layer were covered with a top layer, which consisted of coconut mesocarp particles with a mean particle size of between 0.5 and 3 cm. This decorative top layer provided 10 vol. % of the mesocarp material of the biofilter.

The first and second layer together had a thickness of 0.85 m. The volume of the first and second layer was 3.0685 m³, the first and the second layer together contained 552.33 kg of coconut mesocarp material. The first and second layer together had a density of 180 kg/m³, the density was determined by determining the weight of the coconut mesocarp material contained in the volume occupied by the first and second layer of the biofilter.

As percolation frame, use was made of a rectangular frame, consisting of a plurality of pipes with a diameter of 40 mm, which were perforated every 15 cm with holes of a diameter of 1 cm.

The biofilter bed was subjected to a nominal hydraulic load of 5 PE (1501/PE) or 750 I of wastewater per day. The biofilter was equipped with a presedimentation tank. The influent was supplied batchwise in batches of approximately 30 liter. The influent runs through the filter in a gravitational manner. The characteristics of the influent were:
- BOD: average 264 mg/l O₂
- Total suspended solids: average 281 mg/l
- NH₄-N: average 57 mg/l
- P_{T}: average 12 mg/l

The biofilter bed was tested during a period of 9 months. The detailed results are shown in table 1 below. During nominal feed, 20 mixed samples of effluent were taken and analyzed. The average composition of the treated effluent was as follows:
- BOD: average 8.8 mg/l O₂
- COD: average 61.7 mg/l O₂
- Total Suspended solids : average 10.7 mg/l
- NH₄-N: average 9.0 mg/l
- P_{T}: average 9.6 mg/l
Which thus gives the following reduction percentages:
- BOD _{red}: average 96.4 %
- COD _{red}: average 90.3 %
- Suspended solids matter _{red}: average 95.6%
- P_{T red} : average 17%

The wastewater purification device according to the present invention thus has excellent purification efficiency, and shows improvements in both BOD reduction as in suspended matter reduction.
BOD = biological oxygen demand
COD = chemical oxygen demand
P_{T} = total phosphor content
TSS = total suspended solids

In order to be suitable for discharging into surface waters such as for example creeks, rivers or ponds it is important that the absolute value of the BOD of the purified water is below 25 mg/l, that COD is below 125 mg/l, that TSS is below 60 mg/l and that the pH is between 6-9. Depending on national regulations, discharging of purified water having higher BOD, COD, TSS or pH may be forbidden. In order to be suitable for discharging, not only the BOD, COD and TSS percentage reduction values count, but also their absolute values. Discharge permission, is only issued provided that these three parameters are achieved maximum three times over a test period of 38 weeks, and they are not overrun more than once.

**Table 1:**

| Loading | day | pH | TSS mg/l | BOD mgO₂/l | COD mgO₂/l | NH₄ mgN/l |
|---|---|---|---|---|---|---|
| 100 % | 1 | 7.72 | < 0.1 | 6.0 | 53.6 | 40.0 |
| | | 7.57 | < 0.1 | 7.0 | 50.5 | 22.0 |
| | | 7.13 | < 0.1 | 9.0 | 66.2 | 10.0 |
| | | 7.11 | < 0.1 | 8.0 | 65.5 | 6.4 |
| 50% | | 6.98 | < 0.1 | 6.0 | 55.6 | 1.7 |
| | | 6.83 | < 0.1 | <3.0 | 51.8 | 0.35 |
| 100% | | 6.79 | < 0.1 | 8.0 | 60.6 | 3.5 |
| | | 7.22 | < 0.1 | 8.0 | 61.6 | 6.1 |
| | | 6.63 | < 0.1 | <3.0 | 51.3 | 3.4 |
| | | 6.51 | < 0.1 | <5.0 | 54.0 | 1.8 |
| | | 6.29 | < 0.1 | <5.4 | 53.6 | 2.2 |
| 0% | | - | | - | - | - |
| 100% | | 7.49 | < 0.1 | 15.0 | 69.0 | 17.0 |
| | | 6.24 | < 0.1 | <3.0 | 39.0 | 2.6 |
| | | 6.78 | < 0.1 | 5.0 | 64.0 | 1.4 |
| | | 6.51 | < 0.1 | 3.0 | 46.0 | 1.2 |
| | | 6.12 | < 0.1 | 5.6 | 100.0 | 4.2 |
| 150%* | | 6.8 | < 0.1 | 5.0 | 41.0 | 2.2 |
| | | 6.38 | < 0.1 | 5.0 | 42.0 | 2.0 |
| 100% | | 7.3 | < 0.1 | 8.0 | 58.0 | 6.6 |
| | | 6.87 | < 0.1 | 9.0 | 55.0 | 5.4 |
| | | 7.06 | < 0.1 | 13.0 | 65.0 | 13.0 |
| 50% | | 7.19 | < 0.1 | 12.0 | 78.0 | 6.0 |
| | | 7.01 | < 0.1 | 12.0 | 67.0 | 7.6 |
| 100% | | 7.07 | < 0.1 | 12.0 | 69.0 | 9.8 |
| | | 6.59 | < 0.1 | 25.0 | 88.0 | 13.0 |
| | | 7.53 | < 0.1 | 18.0 | 64.0 | 11.0 |

## Claims

1. Device for the purification of organically polluted wastewater, comprising at least one biofilter (1) for the wastewater purification, which biofilter (1) comprises a bioactive bed (3) with a first layer of coconut mesocarp pieces (11), the device further comprising a water supply (5) for supplying waste water to be purified to an upper part of the biofilter at a position above the first layer (11) and a water collector (15) for collecting purified water from a lower part of the biofilter at a position below the first layer (11), **characterized in that** the mesocarp pieces of the first layer (11) have a mean particle size of at least 1 cm, **in that** the first layer (11) is compacted to have a density of between 75 and 275 kg/m³.

2. Device according to claim 1, **characterized in that** the compacted mesocarp material of the first layer has a density of between 100 and 225 kg/m³.

3. Device according to claim 1 or 2, **characterized in that** and **in that** below the first upper layer a porous second layer (12) is provided for draining water from the first layer (11) towards the water collector (15)

4. Device according to any one of claims 1-3, **characterized in that** means are provided to maintain a pH in the first layer (11) between 6 and 9.

5. Device according to any one of claims 1-4, **characterized in that** the mesocarp pieces are mixed with an agent which is capable of stabilizing tannic acid or its precursors or its decomposition compounds released by the coconut mesocarp as a function of time.

6. Device according to claim 5, **characterized in that** the agent is a material which contains granular CaCO₃ or MgCO₃ or a mixture of these materials.

7. Device according to any one of claims 1 to 6, **characterized in that** the wastewater supply (5) is arranged to provide a substantially homogeneous water distribution over a top face (20) of the first mesocarp layer (11).

8. Device according to any one of claims 1 to 7, **characterized in that** the wastewater supply is provided to supply a batchwise flow of wastewater.

9. Device according to any one of claim 1 to 8, **characterized in that** the pieces of the first mesocarp layer (11) have a mean particle size of between 2 and 4 cm.

10. Device according to any one of claims 3-9, **characterized in that** the second layer comprises a layer of material pieces, in particular mesocarp pieces (12) with a larger mean particle size than the mesocarp pieces of the first layer (11).

11. Device according to claim 10, **characterized in that** the mesocarp pieces of the second layer (12) have an average diameter of between 4 and 7 cm.

12. Device according to any one of claims 3-9, **characterized in that** the second layer (12) is made of a plastic material comprising a plurality of cavities (7) for temporarily storing water leaving the first layer (11) and holes for transferring water from the cavities to the water collector (15).

13. Device according to any one of claims 1 to 12, **characterized in that** the sum of the thicknesses of the first (11) and second layer (12) is al least 85 cm.

14. Device according to any one of claims 1 to 11, **characterized in that** below the second layer (12) a layer (13) is provided of a carrier for denitrification micro-organisms, in particular a layer containing charcoal.

15. Device according to any one of claims 1 to 14, **characterized in that** the mesocarp pieces of the first layer are grafted with micro-organisms in advance.

16. Device according to any one of claims 1 to 15, **characterized in that** the device is at least partly open to air.

17. Device according to any one of claims 1-16, **characterized in that** a top layer of a water absorption material (14) is placed on top of the first mesocarp layer (11).

18. Device according to any one of claims 1-17 **characterized in that** the device comprises an anaerobic pre-sedimentation tank (2), which is connected to the biofilter (1, 3).

19. A method for producing a device for the purification of wastewater comprising at least one biofilter for the wastewater purification, wherein at least a first upper layer of coconut mesocarp pieces (11) is positioned on top of a water collector (15), wherein the first layer comprises mesocarp pieces with a mean particle size of at least 1 cm, and wherein the first layer is compacted to have a density of between 75 and 275 kg/m³.

20. A method for purifying water, wherein at least one batch of wastewater is supplied on top of the first mesocarp layer (11) of the device of any one of claims 1-19 and is collected from a lower part of the biofilter at a position below the first layer (11).

## Patentansprüche

1. Vorrichtung zur Reinigung von organisch verschmutztem Abwasser, die wenigstens einen Biofilter (1) zur Abwasserreinigung umfasst, wobei der Biofilter (1) ein biologisch aktives Bett (3) mit einer ersten Schicht von Kokosnussmesocarpstückchen (11) umfasst, wobei die Vorrichtung ferner eine Wasserversorgung (5) umfasst zur Versorgung eines oberen Teils des Biofilters an einer Position oberhalb der ersten Schicht (11) mit zu reinigendem Abwasser und einen Wasserauffänger (15) zum Sammeln von gereinigtem Wasser aus einem unteren Teil des Biofilters an einer Position unterhalb der ersten Schicht (11), **dadurch gekennzeichnet, dass** die Mesocarpstückchen der ersten Schicht (11) eine mittlere Teilchengröße von wenigstens 1 cm aufweisen, wobei die erste Schicht (11) so komprimiert ist, dass sie eine Dichte zwischen 75 und 275 kg/m³ aufweist.

2. Vorrichtung nach Anspruch 1, **dadurch gekennzeichnet, dass** das komprimierte Mesocarpmaterial der ersten Schicht eine Dichte zwischen 100 und 225 kg/m³ aufweist.

3. Vorrichtung nach Anspruch 1 oder 2, **dadurch gekennzeichnet, dass** unterhalb der ersten oberen Schicht eine poröse zweite Schicht (12) bereitgestellt wird zum Ableiten von Wasser aus der ersten Schicht (11) zum Wasserauffänger (15).

4. Vorrichtung nach einem der Ansprüche 1-3, **dadurch gekennzeichnet, dass** Mittel bereitgestellt werden, um einen pH-Wert in der ersten Schicht (11) zwischen 6 und 9 einzustellen.

5. Vorrichtung nach einem der Ansprüche 1-4, **dadurch gekennzeichnet, dass** die Mesocarpstückchen mit einem Wirkstoff gemischt werden, der in der Lage ist, Tanninsäure oder deren Vorläufer oder deren Abbauprodukte zu stabilisieren, die vom Kokosnussmesocarp im Laufe der Zeit freigesetzt werden.

6. Vorrichtung nach Anspruch 5, **dadurch gekennzeichnet, dass** der Wirkstoff ein Material ist, dass granuläres CaCO₃ oder MgCO₃ oder ein Gemisch dieser Materialien enthält.

7. Vorrichtung nach einem der Ansprüche 1 bis 6, **dadurch gekennzeichnet, dass** die Abwasserversorgung (5) so angeordnet ist, dass eine im Wesentlichen homogene Wasserversorgung über eine Deckfläche (20) der ersten Mesocarpschicht (11) bereitgestellt wird.

8. Vorrichtung nach einem der Ansprüche 1 bis 7, **dadurch gekennzeichnet, dass** die Abwasserversorgung bereitgestellt wird, um das Abwasser in einem ansatzweisen Fluss anzuliefern.

9. Vorrichtung nach einem der Ansprüche 1 bis 8, **dadurch gekennzeichnet, dass** die Stückchen der Mesocarpschicht (11) eine mittlere Teilchengröße zwischen 2 und 4 cm aufweisen.

10. Vorrichtung nach einem der Ansprüche 3-9, **dadurch gekennzeichnet, dass** die zweite Schicht eine Schicht von Materialstückchen umfasst, insbesondere Mesocarpstückchen (12) mit einer größeren mittleren Teilchengröße als die Mesocarpstückchen der ersten Schicht (11).

11. Vorrichtung nach Anspruch 10, **dadurch gekennzeichnet, dass** die Mesocarpstückchen der zweiten Schicht (12) einen durchschnittlichen Durchmesser zwischen 4 und 7 cm aufweisen.

12. Vorrichtung nach einem der Ansprüche 3-9, **dadurch gekennzeichnet, dass** die zweite Schicht (12) aus Kunststoffmaterial besteht, das eine Vielzahl von Hohlräumen (7) umfasst zur zeitweisen Speicherung von Wasser, das die erste Schicht (11) verlässt sowie Löcher zur Überführung von Wasser aus den Hohlräumen zum Wasserauffänger (15).

13. Vorrichtung nach einem der Ansprüche 1 bis 12, **dadurch gekennzeichnet, dass** die Summe der Dicke der ersten (11) und zweiten (12) Schicht wenigstens 85 cm beträgt.

14. Vorrichtung nach einem der Ansprüche 1 bis 11, **dadurch gekennzeichnet, dass** unterhalb der zweiten Schicht (12) eine Schicht (13) eines Trägers zur Denitrifizierung von Mikroorganismen bereitgestellt wird, insbesondere eine Schicht, die Aktivkohle enthält.

15. Vorrichtung nach einem der Ansprüche 1 bis 14, **dadurch gekennzeichnet, dass** die Mesorcarpstückchen der ersten Schicht vorher mit Mikroorganismen gepropft werden.

16. Vorrichtung nach einem der Ansprüche 1 bis 15, **dadurch gekennzeichnet, dass** die Vorrichtung wenigstens zum Teil der Luft zugänglich ist.

17. Vorrichtung nach einem der Ansprüche 1-16, **dadurch gekennzeichnet, dass** eine Deckschicht eines Wasser absorbierenden Materials (14) auf die erste Mesocarpschicht (11) aufgebracht wird.

18. Vorrichtung nach einem der Ansprüche 1-17, **dadurch gekennzeichnet, dass** die Vorrichtung einen anaeroben Vorsedimentationstank (2) umfasst, der mit dem Biofilter (1, 3) verbunden ist.

19. Verfahren zur Herstellung einer Vorrichtung zur Reinigung von Abwasser, die wenigstens einen Biofilter zur Abwasserreinigung umfasst, wobei wenigstens eine erste obere Schicht von Kokosnussmesocarpstückchen (11) auf einen Wasserauffänger (15) aufgebracht wird, wobei die erste Schicht Mesocarpstückchen einer mittleren Teilchengröße von wenigstens 1 cm umfasst und wobei die erste Schicht so komprimiert ist, dass sie eine Dichte zwischen 75 und 275 kg/m³ aufweist.

20. Verfahren zur Reinigung von Wasser, wobei wenigstens ein Ansatz von Abwasser auf die erste Mesocarpschicht (11) der Vorrichtung nach einem der Ansprüche 1-19 geleitet wird und aus einem unteren Teil des Biofilters an einer Position unterhalb der ersten Schicht (11) aufgefangen wird.

## Revendications

1. Dispositif pour l'épuration d'eaux usées organiquement polluées, comprenant au moins un biofiltre (1) pour l'épuration d'eaux usées, lequel biofiltre (1) comprend un lit bioactif (3) avec une première couche de morceaux de mésocarpe de noix de coco (11), le dispositif comprenant en outre une alimentation en eau (5) pour alimenter en eaux usées à épurer une partie supérieure du biofiltre à un endroit au-dessus de la première couche (11) et un collecteur d'eau (15) pour collecter l'eau épurée d'une partie inférieure du biofiltre à un endroit en dessous de la première couche (11), **caractérisé en ce que** les morceaux de mésocarpe de la première couche (11) ont une taille moyenne de particule d'au moins 1 cm, **en ce que** la première couche (11) est compactée pour avoir une masse volumique comprise entre 75 et 275 kg/m³_{.}

2. Dispositif selon la revendication 1, **caractérisé en ce que** le matériau mésocarpique compacté de la première couche a une masse volumique comprise entre 100 et 225 kg/m³.

3. Dispositif selon la revendication 1 ou 2, **caractérisé en ce qu'**en dessous de la première couche supérieure, une deuxième couche (12) poreuse est prévue pour drainer l'eau de la première couche (11) vers le collecteur d'eau (15).

4. Dispositif selon l'une quelconque des revendications 1 - 3, **caractérisé en ce que** des moyens sont prévus pour maintenir un pH dans la première couche (11) entre 6 et 9.

5. Dispositif selon l'une quelconque des revendications 1 - 4, **caractérisé en ce que** les morceaux de mésocarpe sont mélangés avec un agent qui est capable de stabiliser l'acide tannique ou ses précurseurs ou ses composés de décomposition libérés par le mésocarpe de noix de coco comme une fonction de temps.

6. Dispositif selon la revendication 5, **caractérisé en ce que** l'agent est un matériau qui contient du CaCO₃ ou du MgCO₃ granulaire ou un mélange de ces matériaux.

7. Dispositif selon l'une quelconque des revendications 1 à 6, **caractérisé en ce que** l'alimentation en eaux usées (5) est agencée pour fournir une distribution d'eau sensiblement homogène sur la face supérieure (20) de la première couche (11) de mésocarpe.

8. Dispositif selon l'une quelconque des revendications 1 à 7, **caractérisé en ce que** l'alimentation en eaux usées est prévue pour fournir un flux d'eaux usées par lot.

9. Dispositif selon l'une quelconque des revendications 1 à 8, **caractérisé en ce que** les morceaux de la première couche (11) de mésocarpe ont une taille moyenne de particule comprise entre 2 et 4 cm.

10. Dispositif selon l'une quelconque des revendications 3 - 9, **caractérisé en ce que** la deuxième couche comprend une couche de morceaux de matériau, en particulier des morceaux de mésocarpe (12) ayant une taille moyenne de particule plus grande que les morceaux de mésocarpe de la première couche (11).

11. Dispositif selon la revendication 10, **caractérisé en ce que** les morceaux de mésocarpe de la deuxième couche (12) ont un diamètre moyen compris entre 4 et 7 cm.

12. Dispositif selon l'une quelconque des revendications 3 - 9, **caractérisé en ce que** la deuxième couche (12) est réalisée dans une matière plastique comprenant une pluralité de cavités (7) pour stocker temporairement l'eau quittant la première couche (11) et des trous pour transférer l'eau des cavités vers le collecteur d'eau (15).

13. Dispositif selon l'une quelconque des revendications 1 à 12, **caractérisé en ce que** la somme des épaisseurs de la première (11) et de la deuxième couche (12) est au moins égale à 85 cm.

14. Dispositif selon l'une quelconque des revendications 1 à 11, **caractérisé en ce qu'**en dessous de la deuxième couche (12), il est prévu une couche (13) d'un support pour micro-organismes de dénitrification, en particulier une couche contenant du charbon de bois.

15. Dispositif selon l'une quelconque des revendications 1 à 14, **caractérisé en ce que** les morceaux de mésocarpe de la première couche sont greffés à l'avance avec des micro-organismes.

16. Dispositif selon l'une quelconque des revendications 1 à 15, **caractérisé en ce que** le dispositif est au moins en partie ouvert à l'air.

17. Dispositif selon l'une quelconque des revendications 1 à 16, **caractérisé en ce qu'**une couche supérieure d'un matériau absorbeur d'eau (14) est placée au-dessus de la première couche (11) de mésocarpe.

18. Dispositif selon l'une quelconque des revendications 1 à 17, **caractérisé en ce que** le dispositif comprend un réservoir de pré-sédimentation anaérobie (2) qui est relié au biofiltre (1, 3).

19. Procédé pour produire un dispositif pour l'épuration d'eaux usées comprenant au moins un biofiltre pour l'épuration d'eaux usées, dans lequel au moins une première couche (11) supérieure de morceaux de mésocarpe de noix de coco est positionnée au-dessus d'un collecteur d'eau (15), dans lequel la première couche comprend des morceaux de mésocarpe ayant une taille moyenne de particule d'au moins 1 cm, et dans lequel la première couche est compactée pour avoir une masse volumique comprise entre 75 et 275 kg/m³.

20. Procédé pour épurer de l'eau, dans lequel au moins un lot d'eaux usées est fourni au dessus de la première couche (11) de mésocarpe du dispositif de l'une quelconque des revendications 1 - 19 et est collecté de la partie inférieure du biofiltre à un endroit en dessous de la première couche (11).
